# EUROPEAN PATENT APPLICATION

(11) **EP 4 498 568 A1**
(43) Date of publication of application: **29.01.2025**
(21) Application number: 23790892.6
(22) Date of filing: 02.03.2023
(51) Int. Cl.: H02J 7/06, H02J 7/00, H01M 10/44

(54) **CHARGING AND DISCHARGING CIRCUIT CONTROL METHOD AND APPARATUS, SYSTEM, DEVICE, AND STORAGE MEDIUM**

(30) Priority: 22.04.2022 CN 202210429620
(71) Applicant: Contemporary Amperex Technology Co., Limited, Ningde City, Fujian PRC 352100 (CN)
(72) Inventor: CHEN, Wei, Ningde, Fujian 352100 (CN); CAI, Feilong, Ningde, Fujian 352100 (CN); PAN, Xianxi, Ningde, Fujian 352100 (CN); HUANG, Xiaojian, Ningde, Fujian 352100 (CN); YAN, Yu, Ningde, Fujian 352100 (CN); DAN, Zhimin, Ningde, Fujian 352100 (CN)
(74) Representative: Gong, Jinping
(86) International application number: PCT/CN2023/079213
(87) International publication number: WO 2023/202229

(57) **Abstract**

The present application discloses a method, apparatus, system, device and storage medium for controlling a charge and discharge circuit. The charge and discharge circuit includes an M-phase motor winding, where M is a positive integer. The method includes: controlling the charge and discharge circuit to start charge and discharge; acquiring a first current value and second current values, where the first current value is a current value flowing through a neutral line of the M-phase motor winding, and the second current value is a current value flowing through a single winding; determining whether a current charge and discharge state is normal according to the first current value and the second current values; and if not, controlling the charge and discharge power to be reduced. With the method for controlling according to the present application, it is determined whether the current charge and discharge state is normal according to the current value flowing through the neutral line of the M-phase motor winding and the current values flowing through the windings. If it is determined to be abnormal, the charge and discharge power is controlled to be reduced, thereby effectively reducing the safety hazards caused by abnormal current values and improving the safety of the charge and discharge circuit.

## Description

### TECHNICAL FIELD

The present application relates to the technical field of batteries and, in particular, to a method, apparatus, system, device and storage medium for controlling a charge and discharge circuit.

### BACKGROUND

With the development of new energy technologies, power batteries are widely used in new energy vehicles, consumer electronics, energy storage systems and other technical fields. When the power battery is at an excessively low temperature, its discharge capacity decays, and the power battery cannot be charged when the power battery is at an excessively low temperature. Therefore, in order to enable the normal use of the power battery, it is necessary to heat the power battery at an excessively low temperature. In the prior art, when heating the power battery, a solution lacks for handling abnormal current conditions in the charge and discharge process, such as excessive current, which tends to lead to safety hazards caused by the abnormal current conditions and low charge and discharge safety.

### SUMMARY OF THE INVENTION

In view of the above problems, the present application provides a method, apparatus, system, device and storage medium for controlling a charge and discharge circuit, which can solve the technical problem in the prior art of lack of a solution for handling abnormal current conditions in the charge and discharge process, which tends to lead to safety hazards caused by the abnormal current conditions and low charge and discharge safety. A simple summary is presented below to provide a basic understanding of some aspects of the disclosed embodiments. This section of summary is not an extensive overview and is not intended to identify key/critical component elements nor to delineate the protection scope of the embodiments. Its sole purpose is to present some concepts in a simplified form as a prelude to the detailed description presented later.

According to a first aspect of embodiments of the present application, a method for controlling a charge and discharge circuit is provided, where the charge and discharge circuit includes an M-phase motor winding, M being a positive integer. The method includes:
controlling the charge and discharge circuit to start charge and discharge;
acquiring a first current value and second current values, where the first current value is a current value flowing through a neutral line of the M-phase motor winding, and the second current value is a current value flowing through a single winding;
determining whether a current charge and discharge state is normal according to the first current value and the second current values; and
if not, controlling the charge and discharge power to be reduced.

In the technical solution provided in the first aspect, it is determined whether the current charge and discharge state is normal according to the current value flowing through the neutral line of the M-phase motor winding and the current values flowing through the windings. If it is determined to be abnormal, the charge and discharge power is controlled to be reduced, thereby effectively reducing the safety hazards caused by abnormal current values and improving the safety of the charge and discharge circuit.

In some embodiments of the present application, the acquiring the first current value and the second current values includes:
receiving a first current value and second current values detected by a current detection module.

The current values can be accurately and quickly acquired by detecting the current value flowing through the neutral line and the current values flowing through the windings by the current detection module.

In some embodiments of the present application, the determining whether a current charge and discharge state is normal according to the first current value and the second current values includes:
if an absolute value of a difference between any two of the second current values is less than a first preset threshold, an absolute value of a difference between a sum of all the second current values and the first current value is less than a second preset threshold, the first current value is less than a third preset threshold, and each of the second current values is less than a fourth preset threshold, then determining the current charge and discharge state to be normal; otherwise, determining it to be abnormal. By making the determination according to the preset determining condition of the current charge and discharge state, it can be accurately determined whether the current charge and discharge state is normal.

In some embodiments of the present application, the acquiring the first current value and the second current values includes:
receiving a first current value and second current values of M-1 windings detected by the current detection module, where M is a positive integer greater than 1; and
calculating a difference between the first current value and a sum of the second current values of the M-1 windings to obtain the second current value of the remaining winding.

By detecting the first current value and the second current values of the M-1 windings and acquiring the second current value of the remaining winding through calculation, one less current detection unit can be used, thereby reducing costs.

In some embodiments of the present application, the determining whether a current charge and discharge state is normal according to the first current value and the second current values includes:
if the absolute value of the difference between any two of the second current values is less than the first preset threshold, the first current value is less than the third preset threshold, and each of the second current values is less than the fourth preset threshold, then determining the current charge and discharge state to be normal; otherwise, determining it to be abnormal. By making the determination according to the preset determining condition of the current charge and discharge state, it can be accurately determined whether the current charge and discharge state is normal.

In some embodiments of the present application, the controlling the charge and discharge power to be reduced includes:
controlling a charge and discharge cycle to be shortened to reduce the charge and discharge power. Controlling a charge and discharge cycle to be shortened to reduce the charge and discharge power allows easy operation.

In some embodiments of the present application, the controlling the charge and discharge power to be reduced includes:
acquiring a deviation degree of the first current value and the second current values from a preset normal state; and
controlling the charge and discharge power to be reduced according to the deviation degree. By controlling the charge and discharge power to be reduced according to the deviation degree, accurate control of the operation of reducing the charge and discharge power can be achieved.

In some embodiments of the present application, the second current values are all acquired through detection by the current detection module; and the acquiring a deviation degree of the first current value and the second current values from the preset normal state includes:
acquiring deviation values; where the deviation values include a difference between an absolute value of a difference between any two second current values and a first preset threshold, a difference between an absolute value of a difference between a sum of all the second current values and the first current value and a second preset threshold, a difference between the first current value and a third preset threshold, and a difference between each of the second current values and a fourth preset threshold; and
calculating a weighted sum of the deviation values according to a preset weight corresponding to each of the deviation values to obtain the deviation degree. The deviation degree acquired through this step is relatively accurate, which helps to accurately control the reduction of the charge and discharge power according to the deviation degree, thereby enabling accurate control of the operation of reducing the charge and discharge power.

In some embodiments of the present application, one of the second current values is calculated according to the first current value and other second current values detected by the current detection module; and the acquiring a deviation degree of the first current value and the second current values from the preset normal state includes:
acquiring deviation values; where the deviation values include the difference between the absolute value of the difference between any two of the second current values and the first preset threshold, the difference between the first current value and the third preset threshold, and the difference between the current value flowing through each of the windings and the fourth preset threshold; and
calculating a weighted sum of the deviation values according to a preset weight corresponding to each of the deviation values to obtain the deviation degree. The deviation degree acquired through this step is relatively accurate, which helps to accurately control the reduction of the charge and discharge power according to the deviation degree, thereby enabling accurate control of the operation of reducing the charge and discharge power.

In some embodiments of the present application, the controlling the charge and discharge power to be reduced according to the deviation degree includes:
determining a power reduction amplitude corresponding to the deviation degree from a preset correspondence between deviation degree and power reduction amplitude;
determining a shortened time length of the charge and discharge cycle corresponding to the power reduction amplitude according to the correspondence between charge and discharge power and charge and discharge cycle; and
controlling the charge and discharge cycle to be shortened according to the shortened time length.

The shortened time length of the charge and discharge cycle corresponding to the power reduction amplitude acquired through this step is relatively accurate, which helps to accurately control the charge and discharge cycle to be shortened according to the shortened time length.

In a second aspect, the present application provides an apparatus for controlling a charge and discharge circuit, where the charge and discharge circuit includes an M-phase motor winding, M being a positive integer. The method includes:
a start control module configured to control the charge and discharge circuit to start charge and discharge;
a current value acquisition module configured to acquire a first current value and second current values, where the first current value is a current value flowing through a neutral line of the M-phase motor winding, and the second current value is a current value flowing through a single winding;
a state determination module configured to determine whether a current charge and discharge state is normal according to the first current value and the second current values; and
a power control module configured to, if not, control the charge and discharge power to be reduced.

In the technical solution provided in the second aspect, it is determined whether the current charge and discharge state is normal according to the current value flowing through the neutral line of the M-phase motor winding and the current values flowing through the windings. If it is determined to be abnormal, the charge and discharge power is controlled to be reduced, thereby effectively reducing the safety hazards caused by abnormal current values and improving the safety of the charge and discharge circuit.

In a third aspect, the present application provides a system for controlling a charge and discharge circuit, including a control module and a charge and discharge circuit connected to each other, where the charge and discharge circuit includes an M-phase motor winding; and the control module is configured to perform the method for controlling a charge and discharge circuit of the first aspect.

The technical solution provided in the third aspect can implement the method for controlling of the first aspect, thereby achieving the same beneficial technical effects as the first aspect.

In a fourth aspect, the present application provides an electronic device including a memory, a processor and a computer program that is stored in the memory and is runnable on the processor, where the processor executes the program to implement the method for controlling a charge and discharge circuit of the first aspect.

The technical solution provided in the fourth aspect can implement the method for controlling of the first aspect, thereby achieving the same beneficial technical effects as the first aspect.

In a fifth aspect, the application provides a computer-readable storage medium having a computer program stored thereon, where the program is executed by a processor to implement the method for controlling a charge and discharge circuit of the first aspect.

The technical solution provided in the fifth aspect can implement the method for controlling of the first aspect, thereby achieving the same beneficial technical effects as the first aspect.

Other features and advantages of the present application will be explained in the subsequent description, and some of them will become obvious from the description, or some of them can be inferred or determined without doubt from the description, or can be understood by implementing the embodiments of the present application.

### DESCRIPTION OF DRAWINGS

To describe the technical solutions of the embodiments of the present application or the prior art more clearly, the drawings to be used in the description of the embodiments or the prior art are briefly introduced below. Apparently, the drawings described below represent merely some embodiments recited in the present application. For those of ordinary skills in the art, other drawings can also be obtained based on these drawings without creative efforts.
Fig. 1 shows a flow chart of a method for controlling a charge and discharge circuit according to some implementations of the present application;
Fig. 2 shows a circuit diagram of a charge and discharge circuit according to some implementations of the present application;
Fig. 3 shows a circuit diagram of a charge and discharge circuit according to some implementations of the present application;
Fig. 4 shows a structural block diagram of an apparatus for controlling a charge and discharge circuit according to some implementations of the present application;
Fig. 5 shows a structural block diagram of an electronic device according to some implementations of the present application; and
Fig. 6 shows a schematic diagram of a computer-readable storage medium according to some implementations of the present application.

The realization of the purpose, functional features and advantages of the present application will be further explained in conjunction with the embodiments and with reference to the accompanying drawings.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skills in the art, the specific meanings of the above terms in the embodiments of the present application can be understood according to specific situations.

Due to the advantages of high power, high energy density, good environmental protection performance, and the like, power batteries have been widely used in the technical fields such as new energy vehicles, consumer electronics, and energy storage systems. Power batteries can be used, without limitation, in electrical apparatuses such as a vehicle, a ship, or an aircraft.

Taking electric vehicles as an example, electric vehicles powered by power batteries have the advantages such as good environmental protection effects, low noise, low cost, and the ability to effectively promote energy conservation and emission reduction. They have huge market prospects and are conducive to the sustainable development of the economy. Due to electrochemical properties of a power battery, in a low temperature environment, the performance of the power battery is greatly limited, which seriously affects use of a vehicle by a customer in the low temperature environment. Therefore, in order to enable the normal use of the power battery, it is necessary to heat the power battery in the low temperature environment. The inventor has found that, in the prior art, when heating the power battery, a solution lacks for handling abnormal current conditions in the charge and discharge process, such as excessive current, which tends to lead to safety hazards caused by the abnormal current conditions and low charge and discharge safety. For example, if the current value is too large in the charge and discharge process and exceeds the safety threshold, it may cause problems such as circuit damage, and in severe cases even cause safety accidents such as circuit fire. Therefore, it is urgent to solve these problems existing in the prior art.

In view of the above problems, embodiments of the present application provide a method for controlling a charge and discharge circuit, which includes acquiring a first current value and second current values in real time, where the first current value is the current value flowing through a neutral line of an M-phase motor winding in the charge and discharge circuit, and the second current value is the current value flowing through a single winding in the charge and discharge circuit. According to the first current value and the second current values, it is determined whether a current charge and discharge state is normal. If it is abnormal, the charge and discharge power is controlled to be reduced, thereby effectively reducing the safety hazards caused by abnormal current values and improving the safety of the charge and discharge circuit.

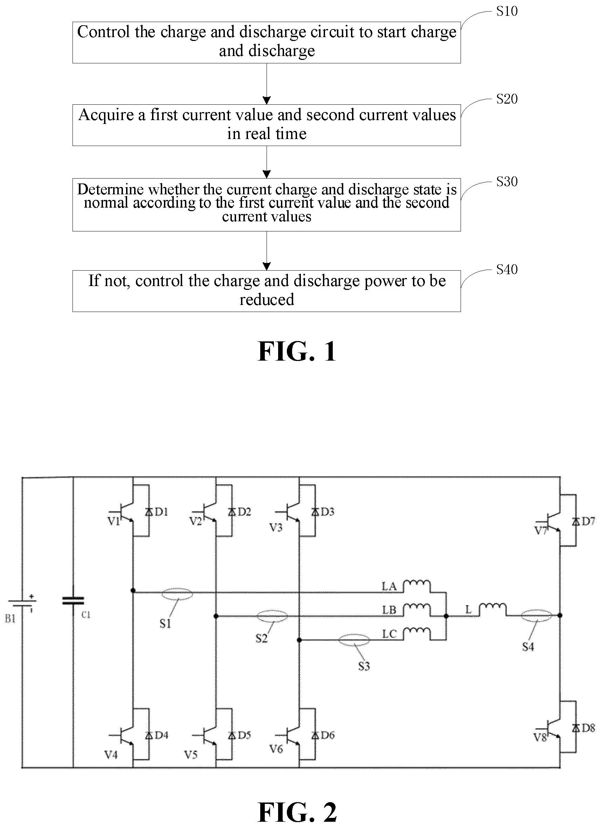

As shown in Fig. 1, an embodiment of the present application provides a method for controlling a charge and discharge circuit, where the charge and discharge circuit includes an M-phase motor winding, M being a positive integer. In some implementations, the method includes steps S10 to S40.

In S10, the charge and discharge circuit is controlled to start charge and discharge.

For example, the charge and discharge circuit may include an M-phase motor winding, a current detection module, and M bridge arm groups of a motor inverter. M is a positive integer. The charge and discharge circuit may further include a capacitor connected in parallel with the battery. Each winding is connected to upper and lower bridge arm connection points of the corresponding bridge arm group.

The current detection module includes a first current detection unit and at least M-1 second current detection units. The first current detection unit and the second current detection units may be current sensors.

The neutral line of the M-phase motor winding, the first current detection unit and the upper and lower bridge arm connection points of the charge and discharge switching bridge arm group are connected in sequence; and the first current detection unit is configured to detect the first current value flowing through the neutral line.

Each second current detection unit is connected in series between a corresponding winding and the corresponding bridge arm group to detect a second current value flowing through the corresponding winding.

The motor inverter has M bridge arm groups, each bridge arm group includes an upper bridge arm and a lower bridge arm connected in series, and the upper and lower bridge arm connection points of each bridge arm group are connected to the corresponding winding in the M-phase motor winding.

The charge and discharge circuit may further include at least one energy storage element connected in series between the first current detection unit and the neutral line of the M-phase motor winding. The energy storage element may be, for example, an inductor, a capacitor, or the like.

The upper bridge arm and the lower bridge arm of the charge discharge switching bridge arm group are configured to be trigged by a charge-discharge enable signal to be turned on or off.

The upper bridge arm includes a first switch, and the lower bridge arm includes a second switch; or, the upper bridge arm includes a first switch and a first diode connected in parallel, and the lower bridge arm includes a second switch and a second diode connected in parallel;
and the negative electrode of the first diode is connected to the positive electrode of the power battery, the positive electrode of the first diode is connected to the negative electrode of the second diode, and the positive electrode of the second diode is connected to the negative electrode of the power battery. The power battery includes at least one battery pack.

Referring to the circuit diagram shown in Fig. 2, V1, V2, ... V8 serve as switches, and elements capable of functioning as switches, such as IGBT tubes, may be used; and D1, D2, ... D8 may all be diodes. The upper bridge arm of the charge and discharge switching bridge arm group includes V7 and D7 connected in parallel, and the lower bridge arm of the charge and discharge switching bridge arm group includes V8 and D8 connected in parallel.

Among the three bridge arm groups of the motor inverter, the upper bridge arm of the first bridge arm group includes V1 and D1 connected in parallel, and the lower bridge arm of the first bridge arm group includes V4 and D4 connected in parallel; the upper bridge arm of the second bridge arm group includes V2 and D2 connected in parallel, and the lower bridge arm of the second bridge arm group includes V5 and D5 connected in parallel; and the upper bridge arm of the third bridge arm group includes V3 and D3 connected in parallel, and the lower bridge arm of the third bridge arm group includes V6 and D6 connected in parallel.

The negative electrodes of D1, D2, D3 and D7 are all connected to the positive electrode of the power battery B1, and the positive electrodes of D4, D5, D6 and D8 are all connected to the negative electrode of the power battery B1.

The current detection module includes a current sensor 1, a current sensor 2, a current sensor 3 and a current sensor 4. As shown in the figure, the charge and discharge circuit further includes a capacitor C1. An inductor L is further connected in series between the neutral point of the winding and the current sensor 4.

In a charge loop formed by the charge and discharge circuit, the current flows in the following direction: positive electrode of power battery B1 → V1, V2 and V3 → current sensor 1, current sensor 2, current sensor 3 → winding LA, winding LB and winding LC → inductor L → current sensor 4 → V8 → negative electrode of power battery B1. In the charge loop, V4, V5 and V6 are closed.

In a discharge loop formed by the charge and discharge circuit, the current flows in the following direction: negative electrode of power battery B1 → V4, V5 and V6 → current sensor 1, current sensor 2, current sensor 3 → winding LA, winding LB and winding LC → inductor L → current sensor 4 → V7 → positive electrode of power battery B1. In the discharge loop, V1, V2 and V3 are closed.

In S20, a first current value and second current values are acquired in real time, where the first current value is a current value flowing through a neutral line of the M-phase motor winding, and the second current value is a current value flowing through a single winding.

In some implementations, acquiring the first current value and the second current values in real time includes: receiving the first current value and the second current values detected in real time by the current detection module. The current value can be accurately and quickly obtained by detecting the current value flowing through the neutral line and the current values flowing through the windings by the current detection module.

For example, the current sensor 1, the current sensor 2, and the current sensor 3 detect a current value I1 of the winding LA, a current value I2 of the winding LB, and a current value I3 of the winding LC, respectively. The current sensor 4 detects a current value I4 flowing through the neutral line.

In S30, it is determined whether the current charge and discharge state is normal according to the first current value and the second current values.

In some implementations, the step S30 includes:
if the absolute value of the difference between any two of the second current values is less than a first preset threshold, the absolute value of the difference between the sum of all the second current values and the first current value is less than a second preset threshold, the first current value is less than a third preset threshold, and each of the second current values is less than a fourth preset threshold, then determining the current charge and discharge state to be normal; otherwise, determining the current charge and discharge state to be abnormal. By making the determination according to the preset determining condition of the current charge and discharge state, it can be accurately determined whether the current charge and discharge state is normal.

For example, if the absolute value of the difference between any two of the current values I1, I2, and I3 is less than the first preset threshold, |I1+I2+I3-I4|<the second preset threshold, I4<the third preset threshold, I1<the fourth preset threshold, I2<the fourth preset threshold, and I3<the fourth preset threshold, then the current charge and discharge state is determined to be normal; otherwise, the current charge and discharge state is determined to be abnormal.

In S40, if not, the charge and discharge power is controlled to be reduced.

In controlling the charge and discharge power to be reduced, when the charge and discharge power is reduced to 0, the charge and discharge process stops. Controlling the charge and discharge cycle to be shortened to reduce the charge and discharge power allows easy operation.

In the technical solutions provided in the embodiments of the present application, it is determined whether the current charge and discharge state is normal according to the current value flowing through the neutral line of the M-phase motor winding and the current values flowing through the windings. If it is determined to be abnormal, the charge and discharge power is controlled to be reduced, thereby effectively reducing the safety hazards caused by abnormal current values and improving the safety of the charge and discharge circuit.

In some implementations, acquiring the first current value and the second current values in real time includes:
S201, receiving a first current value and second current values of M-1 windings detected in real time by the current detection module, where M is a positive integer greater than 1; and
S202, calculating the difference between the first current value and the sum of the second current values of the M-1 windings to obtain the second current value of the remaining winding. By detecting the first current value and the second current values of the M-1 windings and acquiring the second current value of the remaining winding through calculation, one less current detection unit can be used, thereby reducing costs.

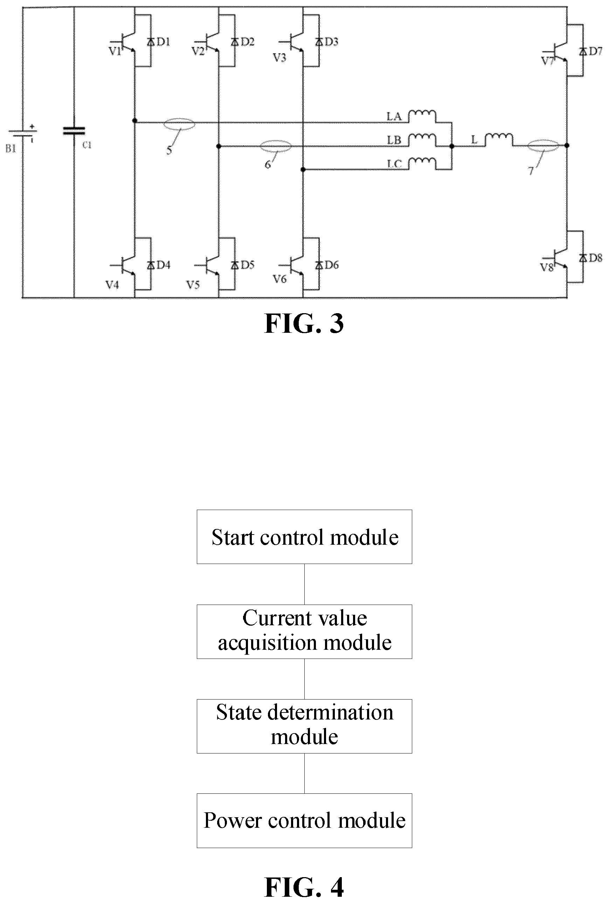

Specifically, as shown in Fig. 3, in the charge and discharge circuit, the current detection module includes a current sensor 5, a current sensor 6, and a current sensor 7. The current sensor 5 and the current sensor 6 detect the current value I5 of the winding LA and the current value I6 of the winding LB respectively. There is no current sensor connected to the winding LC. The current sensor 7 detects the current value I7 flowing through the neutral line, and the current value I8 flowing through the winding LC is equal to I7-I5-I6.

In the charge loop formed by the charge and discharge circuit shown in Fig. 3, the current flows in the following direction: positive electrode of power battery B1 → V1, V2 and V3 → current sensor 5, current sensor 6 → winding LA, winding LB and winding LC → inductor L → current sensor 7 → V8 → negative electrode of power battery B1. In the charge loop, V4, V5 and V6 are closed.

In the discharge loop formed by the charge and discharge circuit, the current flows in the following direction: negative electrode of power battery B1 → V4, V5 and V6 → current sensor 5, current sensor 6 → winding LA, winding LB and winding LC → inductor L → current sensor 7 → V7 → positive electrode of power battery B1. In the discharge loop, V1, V2 and V3 are closed.

In some implementations, the step S30 includes:
if the absolute value of the difference between any two of the second current values is less than the first preset threshold, the first current value is less than the third preset threshold, and each of the second current values is less than the fourth preset threshold, then determining the current charge and discharge state to be normal; otherwise, determining it to be abnormal.

If the absolute value of the difference between any two current values among the current values I5, I6 and I8 is less than the first preset threshold, the current value I7 is less than the third preset threshold, and I5 < the fourth preset threshold, I6 < the fourth preset threshold, and I8 < the fourth preset threshold, then the current charge and discharge state is determined to be normal; otherwise, it is determined to be abnormal;

When the absolute value of the difference between any two current values among the current values I5, I6 and I8 is less than the first preset threshold value, it means that the current values flowing through the three windings are substantially equal or the difference between the current values of any two windings is within the safe current difference range, where ensuring that the current values of the three windings remain substantially equal is one of the conditions to ensure the normal charge and discharge state; when the current value I7 is less than the third preset threshold, I5 < the fourth preset threshold, I6 < the fourth preset threshold, and I8 < the fourth preset threshold, it means that the current value flowing through each winding and the current value flowing through the neutral line are both within the preset safe current value range, where ensuring that the current value flowing through each winding and the current value flowing through the neutral line are both within the preset safe current value range is one of the conditions to ensure the normal charge and discharge state; and when all the above conditions are met, the current charge and discharge state can be determined to be normal; otherwise, it means that the current charge and discharge state is abnormal. By setting the relatively strict preset condition restrictions mentioned above on the charge and discharge state, a high degree of safety in the charge and discharge process can be ensured. Once the preset conditions mentioned above are not met, timely control of reduction of the charge and discharge power can be ensured, thereby further effectively reducing the safety hazards caused by abnormal current values and further improving the safety of the charge and discharge circuit.

In some implementations, controlling the charge and discharge power to be reduced includes: controlling the charge and discharge cycle to be shortened to reduce the charge and discharge power. A charge and discharge cycle is the sum of the charge time length and the discharge time length. Controlling the charge and discharge cycle to be shortened means controlling the charge time length and/or the discharge time length to be shortened, thereby controlling the entire charge and discharge cycle to be shortened.

In some implementations, controlling the charge and discharge power to be reduced includes:
acquiring a deviation degree of the first current value and the second current values from a preset normal state; and
controlling the charge and discharge power to be reduced according to the deviation degree. By controlling the charge and discharge power to be reduced according to the deviation degree, accurate control of the operation of reducing the charge and discharge power can be achieved.

In some implementations, controlling the charge and discharge power to be reduced according to the deviation degree includes:
determining a power reduction amplitude corresponding to the deviation degree from a preset correspondence between deviation degree and power reduction amplitude;
determining a shortened time length of the charge and discharge cycle corresponding to the power reduction amplitude according to the correspondence between charge and discharge power and charge and discharge cycle; and
controlling the charge and discharge cycle to be shortened according to the shortened time length. The shortened time length of the charge and discharge cycle corresponding to the power reduction amplitude acquired through this step is relatively accurate, which helps to accurately control the charge and discharge cycle to be shortened according to the shortened time length.

The correspondence between deviation degree and power reduction amplitude may be a mapping table, a function of the deviation degree and the power reduction amplitude, or the like. Through the correspondence between deviation degree and power reduction amplitude, the shortened time length of the charge and discharge cycle corresponding to any power reduction amplitude can be determined. The correspondence between charge and discharge power and charge and discharge cycle may be a mapping table, a function of the charge and discharge power and the charge and discharge cycle, or the like.

Controlling the charge and discharge cycle to be shortened can be achieved by controlling the frequency of alternating formation of the charge loop and the discharge loop to be increased. For example, the on-time of the charge loop is T1, the on-time of the discharge loop is T2, and the charge and discharge cycle T=T1+T2. Controlling the charge and discharge cycle T to be shortened can be achieved by shortening T1 and T2. The charge process and the discharge process are balanced. The electric energy stored in the windings and the energy storage element during the discharge process of the power battery is completely released and charged into the power battery during the charge process of the power battery.

In a specific example, the on-off time of the switches V1-V8 can be regulated simultaneously, so that the on-time of the switches at a fixed frequency is reduced, thereby reducing the current of the inductor. The duty cycle of V1-V8 is reduced by a control signal. The specific value of the regulation can be regulated according to actual needs. The duty cycle is proportional to the current value. The inductor needs to be charged and discharged alternately to ensure that V1-V8 have the same duty cycle, or the duty cycles are regulated continuously so that the equivalent duty cycles of the four switches V1, V2, V3 and V8 and the four switches V4, V5, V6 and V7 are the same over a period of time, thereby achieving uniform charge and discharge.

In a specific example, the current can be reduced by regulating the duty cycle, and the current can also be reduced by increasing the switching frequency of V1-V8. The higher the frequency, the smaller the current value. The inductor needs to be charged and discharged alternately so that V1-V8 have the same frequency, or the frequencies are regulated continuously so that the equivalent frequencies of the four switching tubes V1, V2, V3 and V8 and the four switching tubes V4, V5, V6 and V7 are the same over a period of time, thereby achieving uniform charge and discharge.

In these two examples, the four switches V1, V2, V3 and V8 need to be regulated simultaneously, and the four switches V4, V5, V6 and V7 need to be regulated simultaneously. The four switches V1, V2, V3, V8 and the four switches V4, V5, V6 and V7 can be regulated with different frequencies and duty cycles, as long as their equivalent frequency and duty cycle regulation ensures uniform charge and discharge of the inductor.

In an example, the second current values are detected by the current detection module; and acquiring a deviation degree of the first current value and the second current values from a preset normal state includes:
acquiring the deviation values; where the deviation values include a difference between an absolute value of a difference between any two second current values and a first preset threshold, a difference between an absolute value of a difference between a sum of all the second current values and the first current value and a second preset threshold, a difference between the first current value and the third preset threshold, and a difference between each of the second current values and a fourth preset threshold; and
calculating a weighted sum of the deviation values according to a preset weight corresponding to each of the deviation values to obtain the deviation degree. The deviation degree acquired through this step is relatively accurate, which helps to accurately control the reduction of the charge and discharge power according to the deviation degree, thereby enabling accurate control of the operation of reducing the charge and discharge power.

For example, the deviation degree
=a(|I1-I2|-Ia)+b(|I2-I3|-Ia)+c(|I1-I3|-Ia)+d(|I1+I2+I3-I4|-Ib)+e(I1-Ic)+f(I2-Ic)+g(I3-Ic)+h(I4-Id). a, b, c, d, e, f, g and h are preset weights respectively. Ia, Ib, Ic, and Id are respectively the first preset threshold, the second preset threshold, the third preset threshold, and the fourth preset threshold.

In another example, one of the second current values is calculated according to the first current value and other second current values detected by the current detection module; and acquiring a deviation degree of the first current value and the second current values from a preset normal state includes:
acquiring the deviation values; where the deviation values include a difference between an absolute value of a difference between any two of the second current values and a first preset threshold, a difference between the first current value and a third preset threshold, and a difference between a current value flowing through each of the windings and a fourth preset threshold; and
calculating a weighted sum of the deviation values according to a preset weight corresponding to each of the deviation values to obtain the deviation degree. The deviation degree acquired through this step is relatively accurate, which helps to accurately control the reduction of the charge and discharge power according to the deviation degree, thereby enabling accurate control of the operation of reducing the charge and discharge power.

For example, the deviation degree
=a(|I1-I2|-Ia)+b(|I2-I3|-Ia)+c(|I1-I3|-Ia)+e(I1-Ic)+f(I2-Ic)+g(I3-Ic)+h(I4-Id). a, b, c, e, f, g and h are preset weights respectively. Ia, Ic and Id are the first preset threshold, the third preset threshold and the fourth preset threshold respectively.

As shown in Fig. 4, another embodiment of the present application provides an apparatus for controlling a charge and discharge circuit, where the charge and discharge circuit includes an M-phase motor winding, M being a positive integer. The method includes:
a start control module configured to control the charge and discharge circuit to start charge and discharge;
a current value acquisition module configured to acquire a first current value and second current values in real time, where the first current value is a current value flowing through the neutral line of the M-phase motor winding, and the second current value is a current value flowing through a single winding;
a state determination module configured to determine whether the current charge and discharge state is normal according to the first current value and the second current values; and
a power control module configured to, if not, control the charge and discharge power to be reduced.

In the apparatus for controlling a charge and discharge circuit of this embodiment, it is determined whether the current charge and discharge state is normal according to the current value flowing through the neutral line of the M-phase motor winding and the current values flowing through the windings. If it is determined to be abnormal, the charge and discharge power is controlled to be reduced, thereby effectively reducing the safety hazards caused by abnormal current values and improving the safety of the charge and discharge circuit.

In some implementations, the current value acquisition module is further specifically configured to: receive the first current value and the second current values detected in real time by the current detection module.

In some implementations, the state determination module is further specifically configured to:
if the absolute value of the difference between any two of the second current values is less than a first preset threshold, the absolute value of the difference between the sum of all the second current values and the first current value is less than a second preset threshold, the first current value is less than a third preset threshold, and each of the second current values is less than a fourth preset threshold, then determine the current charge and discharge state to be normal; otherwise, determine it to be abnormal.

In some implementations, the current value acquisition module includes:
a receiving unit configured to receive a first current value and second current values of M-1 windings detected in real time by the current detection module, where M is a positive integer greater than 1; and
a calculation unit configured to calculate the difference between the first current value and the sum of the second current values of the M-1 windings to obtain the second current value of the remaining winding.

In some implementations, the state determination module is further specifically configured to:
if the absolute value of the difference between any two of the second current values is less than the first preset threshold, the first current value is less than the third preset threshold, and each of the second current values is less than the fourth preset threshold, then determine the current charge and discharge state to be normal; otherwise, determine it to be abnormal.

In some implementations, controlling, by the power control module, the charge and discharge power to be reduced includes: controlling the charge and discharge cycle to be shortened to reduce the charge and discharge power.

In some implementations, the power control module includes a submodule configured to control the charge and discharge power to be reduced. The submodule includes:
an acquisition unit configured to acquire a deviation degree of the first current value and the second current values from a preset normal state; and
the charge and discharge power reduction unit configured to control the charge and discharge power to be reduced according to the deviation degree.

In some implementations, the second current values are each detected by the current detection module. The acquisition unit includes:
a deviation value acquisition subunit configured to acquire the deviation values; where the deviation values include a difference between an absolute value of a difference between any two second current values and a first preset threshold, a difference between an absolute value of a difference between a sum of all the second current values and the first current value and a second preset threshold, a difference between the first current value and the third preset threshold, and a difference between each of the second current values and a fourth preset threshold; and
a calculation subunit configured to calculate a weighted sum of the deviation values according to a preset weight corresponding to each of the deviation values to obtain a deviation degree.

In some implementations, one of the second current values is calculated according to the first current value and other second current values detected by the current detection module. The acquisition unit includes:
a deviation value acquisition subunit configured to acquire the deviation values; where the deviation values include a difference between an absolute value of a difference between any two of the second current values and a first preset threshold, a difference between the first current value and a third preset threshold, and a difference between a current value flowing through each of the windings and a fourth preset threshold; and
a calculation subunit configured to calculate a weighted sum of the deviation values according to a preset weight corresponding to each of the deviation values to obtain a deviation degree.

In some implementations, the charge and discharge power reduction unit includes:
a power reduction amplitude determination subunit configured to determine a power reduction amplitude corresponding to the deviation degree from a preset correspondence between deviation degree and power reduction amplitude;
a shortened time length determination subunit configured to determine a shortened time length of a charge and discharge cycle corresponding to the power reduction amplitude according to the correspondence between charge and discharge power and charge and discharge cycle; and
a charge and discharge cycle shortening subunit configured to control the charge and discharge cycle to be shortened according to the shortened time length.

Another embodiment of the present application provides a system for controlling a charge and discharge circuit, including a control module and the charge and discharge circuit connected to each other, where the charge and discharge circuit includes an M-phase motor winding; and the control module is configured to perform the method for controlling the charge and discharge circuit of any of the above implementations. The control module may be, for example, a component such as a controller that can perform the method for controlling the charge and discharge circuit of any of the above implementations.

The system for controlling of this embodiment is based on the same inventive concept as the method for controlling provided in the embodiments of the present application and has the same beneficial effects as the method it adopts, operates or implements.

Another embodiment of the present application provides an electronic device, characterized in that it includes a memory, a processor, and a computer program that is stored in the memory and is runnable on the processor, and the processor executes the program to implement the method for controlling a charge and discharge circuit of any of the above implementations.

As shown in Fig. 4, the electronic device 10 may include: a processor 100, a memory 101, a bus 102 and a communication interface 103. The processor 100, the communication interface 103 and the memory 101 are connected through the bus 102. The memory 101 has a computer program stored therein that can run on the processor 100, and when the processor 100 runs the computer program, it performs the method provided in any of the implementations described above.

The memory 101 may include a high-speed random access memory (RAM), and may also include a non-volatile memory, such as at least one disk memory. The communication connection between the system network element and at least one other network element can be realized through at least one communication interface 103 (which may be wired or wireless) by using the Internet, wide area network, local area network, metropolitan area network, and the like.

The bus 102 may be an ISA bus, a PCI bus, an EISA bus, or the like. The bus may be classified into an address bus, a data bus, a control bus, or the like. Among them, the memory 101 is used to store a program, and the processor 100 executes the program after receiving the execution instruction. The method disclosed in any of the implementations of the aforementioned embodiments of the present application can be applied in the processor 100 or implemented by the processor 100.

The processor 100 may be an integrated circuit chip having signal processing capabilities. During implementation, various steps of the above method can be completed by an integrated logic circuit of hardware in the processor 100 or by instructions in the form of a software. The processor 100 mentioned above may be a general-purpose processor, which may include a central processing unit (CPU), a network processor (NP), and the like; it may also be a digital signal processor (DSP), an application-specific integrated circuit (ASIC), a field-programmable gate array (FPGA) or other programmable logic devices, discrete gates or transistor logic devices, and discrete hardware components. The various methods, steps and logic block diagrams disclosed in the embodiments of the present application can be implemented or executed. A general-purpose processor may be a microprocessor, or the processor may be any conventional processor or the like. The steps of the method disclosed in conjunction with the embodiments of the present application can be directly embodied as being executed by a hardware coding processor, or can be embodied as being executed by a combination of hardware and software modules in the coding processor. The software module may be located in a random access memory, a flash memory, a read-only memory, a programmable read-only memory, or an electrically erasable programmable memory, a register, or other mature storage media in the art. The storage medium is located in the memory 101, and the processor 100 reads the information from the memory 101 and completes the steps of the above method in conjunction with its hardware.

The electronic device provided by embodiments of the present application is based on the same inventive concept as the method provided in the embodiments of the present application and has the same beneficial effects as the method it adopts, operates or implements.

Another embodiment of the present application provides a computer-readable storage medium having a computer program stored thereon, where the program is executed by a processor to implement the method for controlling a charge and discharge circuit of any of the implementations described above.

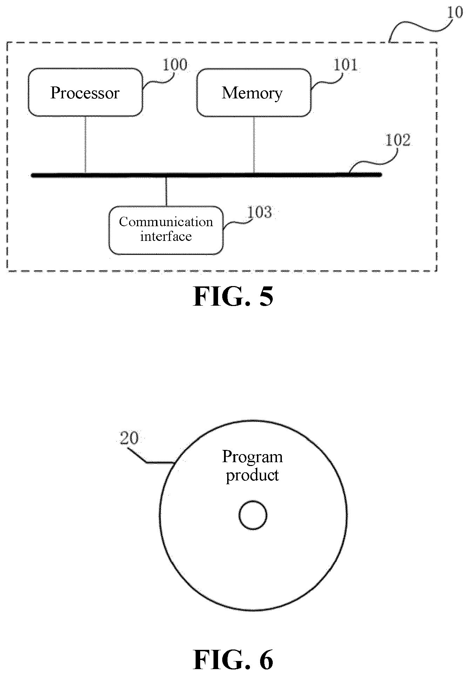

Referring to Fig. 5, the computer-readable storage medium shown in the figure is a compact disc 20 having a computer program (i.e., a program product) stored therein. When the computer program is executed by a processor, it performs the method provided by any of the implementations described above.

It should be noted that examples of the computer-readable storage medium may also include, but are not limited to, phase change memory (PRAM), a static random access memory (SRAM), a dynamic random access memory (DRAM), other types of random access memory (RAM), read-only memory (ROM), electrically erasable programmable read-only memory (EEPROM), flash memory or other optical or magnetic storage media, which shall not be enumerated here.

The computer-readable storage medium provided by the embodiments of the present application described above is based on the same inventive concept as the method for controlling provided in the embodiments of the present application and has the same beneficial effects as the method that the application program stored therein adopts, operates or implements.

It should be noted that
the term "module" is not intended to be limited to a particular physical form. Depending on the specific application, a module may be embodied as hardware, firmware, software, and/or a combination thereof. Furthermore, different modules may share common components or even be embodied by the same components. There may or may not be clear boundaries between different modules.

The algorithms and displays presented herein are not inherently related to any particular computer, virtual apparatus, or other devices. Various general purpose apparatuses may also be used with examples on this basis herein. The structure required to construct such an apparatus will be apparent from the above description. Furthermore, the present application is not targeted at any particular programming language. It should be appreciated that a variety of programming languages may be used to implement the contents of the present application described herein, and the above descriptions made for specific languages are intended to disclose the best implementation of the present application.

It should be understood that although the steps in the flow charts of the drawings are shown in sequence as indicated by the arrows, these steps are not necessarily executed in sequence as indicated by the arrows. Unless explicitly stated herein, the execution of these steps is not strictly limited to the sequence, and the steps may be executed in other sequences. Moreover, at least some of the steps in the flow charts of the drawings may include multiple sub-steps or multiple stages, which may not necessarily be completely executed at the same time, but may be executed at different times, and the execution order may not necessarily be sequential, but may be executed in turn or alternately with other steps or at least some of the sub-steps or stages of other steps.

The embodiments described above only represent implementations of the present application, and the description thereof is specific and detailed, but cannot therefore be understood as a limitation on the patent scope of the present application. It should be noted that those of ordinary skills in the art can further make variations and improvements without departing from the concept of the present application, and all such variations and improvements shall fall within the scope of protection of the present application. Therefore, the scope of protection of the present patent application shall be defined by the following claims.

## Claims

1. A method for controlling a charge and discharge circuit, wherein the charge and discharge circuit comprises an M-phase motor winding, M being a positive integer; and the method comprises:
controlling the charge and discharge circuit to start charge and discharge;
acquiring a first current value and second current values, wherein the first current value is a current value flowing through a neutral line of the M-phase motor winding, and the second current value is a current value flowing through a single winding;
determining whether a current charge and discharge state is normal according to the first current value and the second current values; and
if not, controlling the charge and discharge power to be reduced.

2. The method according to claim 1, wherein the acquiring a first current value and second current values comprises:
receiving a first current value and second current values detected by a current detection module.

3. The method according to claim 2, wherein the determining whether a current charge and discharge state is normal according to the first current value and the second current values comprises:
if an absolute value of a difference between any two of the second current values is less than a first preset threshold, an absolute value of a difference between a sum of all the second current values and the first current value is less than a second preset threshold, the first current value is less than a third preset threshold, and each of the second current values is less than a fourth preset threshold, then determining the current charge and discharge state to be normal; otherwise, determining it to be abnormal.

4. The method according to claim 1, wherein the acquiring a first current value and second current values comprises:
receiving a first current value and second current values of M-1 windings detected by a current detection module, M being a positive integer greater than 1; and
calculating a difference between the first current value and a sum of the second current values of the M-1 windings to obtain the second current value of the remaining winding.

5. The method according to claim 4, wherein the determining whether a current charge and discharge state is normal according to the first current value and the second current values comprises:
if an absolute value of a difference between any two of the second current values is less than a first preset threshold, the first current value is less than a third preset threshold, and each of the second current values is less than a fourth preset threshold, then determining the current charge and discharge state to be normal; otherwise, determining it to be abnormal.

6. The method according to any one of claims 1 to 5, wherein the controlling the charge and discharge power to be reduced comprises:
controlling a charge and discharge cycle to be shortened to reduce the charge and discharge power.

7. The method according to any one of claims 1 to 5, wherein the controlling the charge and discharge power to be reduced comprises:
acquiring a deviation degree of the first current value and the second current values from a preset normal state; and
controlling the charge and discharge power to be reduced according to the deviation degree.

8. The method according to claim 7, wherein the second current values are detected by a current detection module; and the acquiring a deviation degree of the first current value and the second current values from the preset normal state comprises:
acquiring deviation values; wherein the deviation values comprise a difference between an absolute value of a difference between any two second current values and a first preset threshold, a difference between an absolute value of a difference between a sum of all the second current values and the first current value and a second preset threshold, a difference between the first current value and a third preset threshold, and a difference between each of the second current values and the fourth preset threshold; and
calculating a weighted sum of the deviation values according to a preset weight corresponding to each of the deviation values to obtain the deviation degree.

9. The method according to claim 7, wherein one of the second current values is calculated according to the first current value and other second current values detected by a current detection module; and the acquiring a deviation degree of the first current value and the second current values from the preset normal state comprises:
acquiring deviation values; wherein the deviation values comprise a difference between an absolute value of a difference between any two of the second current values and a first preset threshold, a difference between the first current value and a third preset threshold, and a difference between the current value flowing through each of the windings and a fourth preset threshold; and
calculating a weighted sum of the deviation values according to a preset weight corresponding to each of the deviation values to obtain the deviation degree.

10. The method according to claim 7, wherein the controlling the charge and discharge power to be reduced according to the deviation degree comprises:
determining a power reduction amplitude corresponding to the deviation degree from a preset correspondence between deviation degree and power reduction amplitude;
determining a shortened time length of a charge and discharge cycle corresponding to the power reduction amplitude according to a correspondence between charge and discharge power and charge and discharge cycle; and
controlling the charge and discharge cycle to be shortened according to the shortened time length.

11. An apparatus for controlling a charge and discharge circuit, wherein the charge and discharge circuit comprises an M-phase motor winding, M being a positive integer; the method comprises:
a start control module configured to control the charge and discharge circuit to start charge and discharge;
a current value acquisition module configured to acquire a first current value and second current values, wherein the first current value is a current value flowing through a neutral line of the M-phase motor winding, and the second current value is a current value flowing through a single winding;
a state determination module configured to determine whether a current charge and discharge state is normal according to the first current value and the second current values; and
a power control module configured to, if not, control the charge and discharge power to be reduced.

12. A system for controlling a charge and discharge circuit, comprising a control module and the charge and discharge circuit connected to each other, wherein the charge and discharge circuit comprises an M-phase motor winding; wherein the control module is configured to perform the method for controlling a charge and discharge circuit of any one of claims 1 to 10.

13. An electronic device comprising a memory, a processor and a computer program that is stored in the memory and is runnable on the processor, the processor executing the program to implement the method for controlling a charge and discharge circuit of any one of claims 1 to 10.

14. A computer-readable storage medium having a computer program stored therein, wherein the program is executed by a processor to implement the method for controlling a charge and discharge circuit of any one of claims 1 to 10.
